(19) Europäisches Patentamt
European Patent Office
Office européen des brevets

(11) **EP 2 177 582 A2**

(12) **EUROPÄISCHE PATENTANMELDUNG**

(43) Veröffentlichungstag:
**21.04.2010 Patentblatt 2010/16**

(51) Int Cl.:
**C09J 7/02** *(2006.01)*

(21) Anmeldenummer: **09171947.6**

(22) Anmeldetag: **01.10.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **13.10.2008 DE 102008051008**

(71) Anmelder: **tesa AG**
**20253 Hamburg (DE)**

(72) Erfinder:
• **Neubert, Dr. Ingo**
**22850, Norderstedt (DE)**
• **Kampers, Maren**
**21217, Seevetal (DE)**

(54) **Haftklebeband mit funktionalisierter Klebmasse und dessen Verwendung**

(57) Haftklebeband bestehend aus einem Trägermaterial, das ein- oder beidseitig mit einer Haftklebemasse beschichtet ist, dadurch gekennzeichnet, dass mindestens eine Haftklebemassenoberfläche durch eine zusätzliche tensidhaltige Beschichtung funktionalisiert ist, wobei die Funktionalisierung der Haftklebemassenoberfläche auch nach einer Lagerzeit von 6 Wochen bei 40 °C erhalten bleibt sowie die Klebkraft auf Stahl der funktionalisierten Haftklebemasse mindestens 0,5 N/cm beträgt.

EP 2 177 582 A2

**Beschreibung**

Die vorliegende Erfindung betrifft ein Haftklebeband, das durch eine Funktionalisierung der Haftklebemasse ein dauerhaftes schnelles Spreiten beziehungsweise einen dauerhaften schnellen Transport von biologischen Flüssigkeiten wie beispielsweise Blut, Urin, Speichel oder Zellflüssigkeit ermöglicht.

In der modernen Medizindiagnostik werden eine immer größere Anzahl analytischer Hilfsmittel wie zum Beispiel so genannte Microfluidic Devices verwendet. Unter Microfluidic Devices werden Biosensoren und Bio-Chips verstanden, mit denen molekularbiologische Prozeduren wie zum Beispiel Mischen, Separieren, Spalten beziehungsweise Vervielfältigen von Proteinen, Enzymen oder Nukleinsäuren sowie Untersuchungen außerhalb des menschlichen Körpers (in-vitro Diagnostik, IVD) mit kleinsten Mengen an biologischen Flüssigkeiten wie Blut, Speichel, Zellflüssigkeit und Urin durchgeführt werden können. Hierzu gehören Teststreifen, so genannte Diagnoseteststreifen oder Biosensoren, in denen durch enzymatische Reaktionen zum Beispiel der Gehalt an Glukose, Laktat, Cholesterol, Proteinen, Ketonen, Phenylalanin oder Enzymen in biologischen Flüssigkeiten bestimmt werden. Am häufigsten anzutreffen sind Diagnoseteststreifen zur Bestimmung und Überprüfung des Blutzuckergehaltes für Diabetiker. Weitere Beispiele für Microfluidic Devices sind DNA-Chips, DNA-Mircoarrays und Immunoassays zum Nachweis und Untersuchung von Krankheiten und Sensoren zum Detektieren von Pathogenen und Toxinen.

Beispielhaft werden diese Anwendungen in US 2002/0112961 A1, US 6,601,613 B2, US 7,125,711 B2, EP 1 525 916 A1 (Microfluidic Devices), DE 102 34 564 A1, US 5,759,364 A1 (Biosensor), WO 2005/033698 A1 und US 5,997,817 A1 (Blutzuckerteststreifen) offenbart.

Bei allen Microfluidic Devices werden für die entsprechenden molekularbiologischen Prozeduren und Untersuchungen kleine Flüssigkeitsmengen zum Teil im Bereich von wenigen Mikrolitern durch einen Kanal oder Kanalsystem geleitet. Dieser Flüssigkeitstransport wird entweder durch äußere Kräfte wie Pumpen oder Zentrifugalkräfte oder ohne äußere Kräfte lediglich durch Kapillarkräfte realisiert. Je nach Funktionsweise der Microfluidic Devices ist eine Funktionalisierung der Wandung des Kanalsystems für den effektiven und zuverlässigen Flüssigkeitstransport und deren Steuerung notwendig.

In der Literatur sind verschiedene Untersuchungen zu den Themen Kapillarität und Transport von Flüssigkeiten in Kapillaren zu finden. Der Kapillardruck beziehungsweise die Steighöhe einer Flüssigkeitssäule in einer Kapillare sind abhängig von der Oberflächenspannung der Flüssigkeit, der Viskosität der Flüssigkeit, dem Benetzungswinkels und dem Kapillardurchmesser. Die Steighöhe wird nach folgender Formel bestimmt (Gleichung 1 (Gl. 1)):

$$h = \frac{4 * \gamma_l * \cos\theta}{g\,(\zeta_l - \zeta_g) * d} \qquad\qquad \text{Gl. 1}$$

| | |
|---|---|
| h | - Steighöhe beziehungsweise Depressionshöhe |
| $\gamma_l$ | - Oberflächenspannung der Flüssigkeit |
| $\zeta_l$ | - Dichte der Flüssigkeit |
| $\zeta_g$ | - Dichte des Gases (Luft) |
| g | - Erdbeschleunigung |
| θ | - Kontaktwinkel (Benetzungswinkel, Randwinkel) |
| d | - Innendurchmesser der Kapillare |

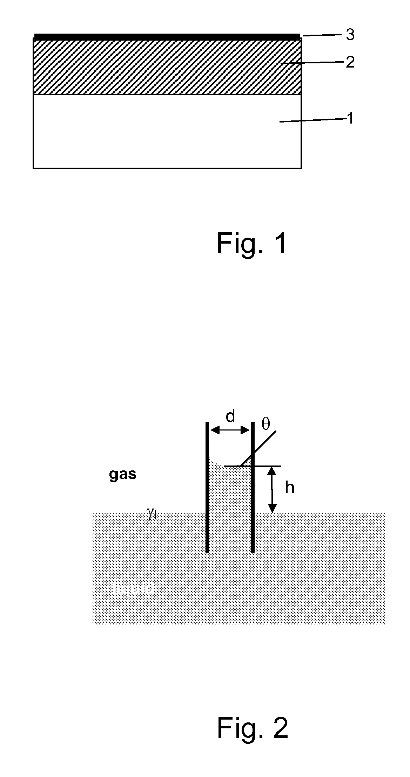

Figur 2 veranschaulicht die Gleichung 1.

Hieraus ergibt sich, dass die Kapillarkräfte mit kleinerem Kapillardurchmesser zunehmen. Eine Verringerung der Fließgeschwindigkeit in einer Kapillare kann daher durch eine Vergrößerung des Querschnitts eines Mikrokanals erreicht werden. Ein weiterer wichtiger Parameter bei der Beeinflussung der Fließgeschwindigkeit einer gegebenen Flüssigkeit ist die Oberflächenspannung der Kanalinnenseite, wohingegen bei einer vorgegebenen Flüssigkeit die Viskosität als Parameter nicht variiert werden kann.

Im Falle eines sehr kleinen Benetzungswinkels zwischen Flüssigkeit und Kapillarwand kommt es zu einer Kapillar-Aszension, das heißt, die Flüssigkeit steigt in der Kapillare. Bei einem Kontaktwinkel von > 90° kommt es jedoch zu einer Kapillar-Depression, die Flüssigkeitsspiegel in der Kapillare liegt unterhalb des Flüssigkeitsspiegel (W. Bohl "Technische Strömungslehre", 13., überarbeitete und erweiterte Auflage, Vogel Verlag, Juni 2005, ISBN: 3834330299, Seite 37f).

In der Literatur gibt es zahlreiche Untersuchungen zur Oberflächenspannung und zum Phänomen der Benetzbarkeit von Festkörpern.

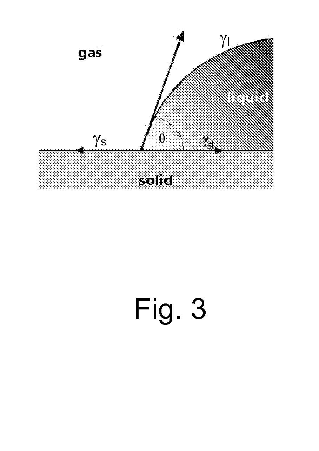

Die Benetzung eines Festkörpers durch eine Flüssigkeit wird durch die Youngsche Gleichung (Gl. 2) beschrieben (siehe hierzu Figur 3)

$$\gamma_l * \cos \theta = \gamma_s - \gamma_{sl} \qquad \text{Gl. 2}$$

$\theta$     - Kontaktwinkel (Benetzungswinkel, Randwinkel)
$\gamma_l$     - Oberflächenspannung der Flüssigkeit
$\gamma_s$     - Oberflächenspannung des Festkörpers
$\gamma_{sl}$     - Grenzflächenspannung zwischen der Flüssigkeit und dem Festkörper

Im Fall, dass die Oberflächenspannungen des Festkörpers und der Flüssigkeit deutlich unterschiedlich sind, erhält man einen Kontaktwinkel $\theta \gg 90°$. Es kommt nicht zur Benetzung der Festkörperoberfläche durch die Flüssigkeit. Im Bereich von 90° bis 20° kommt es zu einer Benetzung der Festkörperoberfläche. Bei Kontaktwinkeln $\theta < 20°$ sind die Oberflächenspannungen zwischen Flüssigkeit und Festkörper sehr ähnlich, und es kommt zu einer sehr guten Benetzung der Festkörperoberfläche durch die Flüssigkeit. Bei Kontaktwinkeln $\theta \ll 20°$ ($\theta \sim 0°$) spreitet die Flüssigkeit auf der Festkörperoberfläche aus.

In der Literatur wird die Verwendung von Tensiden, dem Fachmann als grenzflächenaktive Substanzen bekannt, zur Verbesserung der Benetzbarkeit von Festkörperoberfläche beschrieben. Tenside sind Moleküle oder Polymere, die aus einem unpolaren/hydrophoben Teil (Schwanz) und einer polaren/hydrophilen Gruppe (Kopf) bestehen. Zur Verbesserung der Benetzbarkeit von Oberflächen werden die Tenside üblicherweise der wässrigen Flüssigkeit zugegeben. Das Tensid bewirkt eine Herabsetzung der Oberflächenspannung der wässrigen Flüssigkeit an den Grenzflächen (flüssig-fest und flüssig-gasförmig). Dieser Effekt der Verbesserung der Benetzbarkeit der Oberflächen ist messbar in einer Verringerung des Kontaktwinkels und in der Verringerung der Oberflächenspannung der Flüssigkeit. Der Fachmann unterscheidet zwischen anionischen, kationischen, amphoteren und nichtionischen Tensiden. Der hydrophobe Schwanz von Tensiden kann aus linearen oder verzweigten Alkyl-, Alkylbenzyl-, perfluorierten Alkyl- oder Siloxan-Gruppen bestehen. Mögliche hydrophile Kopfgruppen sind anionische Salze von Carbonsäuren, Phosphorsäuren, Phosphonsäuren, Sulfaten, Sulfonsäuren, kationische Ammoniumsalze oder nichtionische Polyglycoside, Polyamine, Polyglycolester, Polyglycolether, Polyglycolamine, polyfunktionelle Alkohole oder Alkoholethoxylate.

Prinzipiell erhöht eine bessere Benetzbarkeit der Innenseite der Kanäle der Teststreifen und Biosensoren die Transportgeschwindigkeit der biologischen Flüssigkeit innerhalb der Kanäle. Hydrophile Beschichtungen mit polaren Polymeren wie zum Beispiel Polyvinylpyrrolidon, Polycaprolactam, Polyethylenglykol oder Polyvinylalkohol, wie sie in US 2008/0003348 A1, US 5,262,475 A1 oder EP 1 862 514 A1 offenbart sind, oder physikalische oder chemische Oberflächenbehandlungen, wie sie in der WO 2005/111606 A1 offenbart sind, führen zu einer Erhöhung der Oberflächenspannung und damit einer besseren Benetzbarkeit der Kanalwandung. Die Oberfläche kann ebenfalls durch eine Plasmabehandlung modifiziert werden. Durch die Einbringung von Gasen oder organischen Substanzen in die Plasmazone können die Oberflächeneigenschaften gezielt eingestellt werden. So lassen sich sowohl hydrophile als auch hydrophobe Schichten auf der Oberfläche erzeugen. Die Anwendung dieses Verfahrens wird in US 6,955,738 B2 beschrieben.

Es gibt auch einige Beispiele, bei denen ein Tensid auf eine Festkörperoberfläche aufgetragen wird, um so eine bessere Benetzung der Oberfläche zu erreichen. Entsprechende hydrophile Folien für die Anwendung in medizinischen Diagnosestreifen und Microfluidic Devices sind heute bereits kommerziell erhältlich, zum Beispiel die Produkte 9962 und 9971 von 3M Inc., deren Verwendung in US 2002/0110486 A1 und EP 1 394 535 A1 gezeigt wird. Diese Produkte weisen eine Polyesterfolie auf, die entweder ein- oder beidseitig mit einer hydrophilen Beschichtung ausgerüstet ist. Diese Beschichtung besteht aus einer Polyvinylidenchlorid-Beschichtung, die ein Tensid auf Basis eines Alkylbenzylsulfonates enthält. Das Tensid muss zunächst an die Oberfläche der Beschichtung migrieren, bevor die hydrophilen Oberflächeneigenschaften entfaltet werden können. Diese tensidhaltige Beschichtung ist deutlich effektiver für den Flüssigkeitstransport als die vorher beschriebenen Modifikationen mittels einer polaren Polymerbeschichtung oder einer physikalischen Oberflächenbehandlung. Eine detaillierte Untersuchung zeigt jedoch, dass diese Produkte für den Transport von biologischen Flüssigkeiten in Diagnosestreifen zwar geeignet sind, aber erhebliche Mängel bezüglich Homogenität, Transportgeschwindigkeit und Alterungsbeständigkeit aufweisen. In US 2008/0176068 A1 wird ebenfalls eine entsprechende hydrophile Folie bestehend aus einer Polyesterfolie mit einer sehr dünnen Tensidbeschichtung aus vorzugsweise einem Natriumbernsteinsäureester beschrieben.

Die vorhergenannten hydrophilen Folien werden als Deckel beziehungsweise Abdeckung der Kanäle und Kanalsysteme in Biosensoren und Microfluidic Devices verwendet. Die hydrophilen Folien sollen hierbei einen schnellen Flüssigkeitstransport sicherstellen. In der Konstruktion des Biosensors muss die hydrophile Folie durch eine zusätzliche Klebeschicht befestigt werden. Das bringt weitere Schwierigkeiten bezüglich Design, Herstellung und Verträglichkeiten mit sich.

Eine Verbesserung zeigen hierzu die kommerziell verfügbaren hydrophilen Folien ARflow® 90128 und ARflow® 90469 von Adhesives Research Inc., die mit einer hydrophilen heißsiegelbaren Klebmasse ausgerüstet sind, deren Verwendung in WO 02/085185 A2 gezeigt wird. Als heißsiegelbare Klebmasse wird ein thermoplastisches Copolyester unter Zusatz eines Tensids verwendet. Das Wirkprinzip ist analog der vorher beschriebenen Produkte von 3M Inc. In der Schrift wird ebenfalls die Herstellung und Verwendung von hydrophilen, tensidhaltigen Haftklebemassen beschrieben. Damit eine ausreichende Menge an Tensid an die Klebmassenoberfläche migriert und damit eine Wirkung bezüglich des Flüssigkeitstransportes erzielt wird, ist die Zugabe einer erheblichen Menge an Tensid von > 6 Gew.-% zu der Haftklebmasse notwendig. Das Tensid wirkt in dieser hohen Menge in der Klebmassenzusammensetzung wie ein Weichmacher. Dadurch kommt es zu einer erheblichen Verschlechterung der Eigenschaften der Haftklebmasse.

In WO 2004/061029 A2 wird ein Klebeband mit einer Haftklebmasse beschrieben, die ebenfalls ein Tensid, ein polares Polymer oder eine Kombination aus beiden enthält. Der Gehalt an Tensid bezogen auf die Haftklebemasse beträgt in der bevorzugten Ausführung ebenfalls 5 bis 10 Gew.-%.

Aufgabe der vorliegenden Erfindung ist, die Oberfläche einer Haftklebemasse eines flächenförmiges Haftklebebandes, so zu funktionalisieren, dass diese entsprechend den Anforderungen für den Einsatz in Biosensoren, Diagnoseteststreifen und Microfluidic Devices und zum Aufbau derselben geeignet ist und das im Speziellen einen Transport der biologischen Flüssigkeit in und durch die Messkanäle ermöglicht. Hierbei ist weiterhin zu gewährleisten, dass die Eigenschaften und im Speziellen die Benetzungs- und Transporteigenschaften der funktionalisierten Haftklebemasse auch nach einer langen Lagerzeit erhalten bleiben.

Gelöst wird diese Aufgabe durch ein Haftklebeband, wie es im Hauptanspruch niedergelegt ist. Gegenstand der Unteransprüche sind vorteilhafte Weiterentwicklungen des Erfindungsgegenstandes. Des Weiteren umfasst die Erfindung die Verwendungsmöglichkeit des erfindungsgemäßen Haftklebebands unter anderem in medizinischen Diagnosestreifen zur Untersuchung von biologischen Flüssigkeiten.

Demgemäß betrifft die Erfindung ein Haftklebeband, bestehend aus einem Trägermaterial, das ein- oder beidseitig mit einer Haftklebemasse beschichtet ist, wobei mindestens eine Haftklebemassenoberfläche durch eine zusätzliche tensidhaltige Beschichtung funktionalisiert ist, wobei die Wirkung der Funktionalisierung auch nach einer Lagerzeit von mindestens 6 Wochen bei mindestens 40 °C erhalten bleibt.
Die funktionalisierte Haftklebemasse weist eine Klebkraft auf Stahl von mindestens 0,5 N/cm und vorteilhafterweise von mindestens 1,0 N/cm und besonders bevorzugt von mindestens 1,5 N/cm auf.

Eine prinzipielle Darstellung des erfindungsgemäßen Haftklebebandes zeigt die Figur 1. Dort ist das Haftklebeband mit einem Trägermaterial 1 gezeigt, auf das einseitig eine Haftklebemasse 2 aufgetragen ist. Auf die Haftklebemasse 2 ist wiederum die tensidhaltige Beschichtung 3 aufgebracht, wobei die Beschichtung 3 nicht beziehungsweise nur teilweise in die Haftklebemasse 2 eindiffundiert ist.

Ein erheblicher Vorteil einer nachträglichen Funktionalisierung ergibt sich daraus, dass mit diesem Verfahren beliebige Haftklebemassen und Haftklebebänder funktionalisiert werden können.

In der bevorzugten Ausführungsform besteht die Haftklebemasse aus einem oder mehreren Copolymeren, wobei Acrylat-Monomere den Hauptbestandteil bilden.

Weiter bevorzugt wird die Oberfläche der Haftklebemasse durch eine Beschichtung mit einem ionischen, bevorzugt anionischen Tensid, das auch Fluoralkylketten enthalten kann, funktionalisiert, wobei die Beschichtung vorzugsweise als Tensid ein Sulfobernsteinsäurestersalz enthält. Besonders bevorzugt besteht die Beschichtung nach der Trocknung ausschließlich aus einem Natrium-sulfobernsteinsäure-bis-2-ethylhexylester oder Natrium-sulfobernsteinsäure-dioctylester ohne weitere Zusatzstoffe.

Als Trägermaterialien für das erfindungsgemäße Haftklebeband werden die dem Fachmann geläufigen und üblichen Trägermaterialien wie Folien aus Polyester, Polyethylen, Polypropylen, Polyvinylchlorid, besonders bevorzugt Folien aus Polyethylenterephthalat (PET) verwendet.
Diese Trägerfolien können mono- oder biaxial versteckt sowie in einem Coextrusionsprozess als Multischichtfolie aufgebaut sein. Diese Aufzählung ist nicht abschließend zu verstehen, sondern im Rahmen der Erfindung können weitere Folien verwendet werden. Bevorzugt wird eine Trägerfolie aus Polyethylenterephthalat (PET) in einer Dicke von 12 bis 350 $\mu$m und vorzugsweise 50 bis 150 $\mu$m verwendet. Zur Verbesserung der Haftung beziehungsweise Verankerung der Klebmasse auf der Trägerfolie kann eine Primerbeschichtung zwischen Trägerfolie und Haftklebemasse aufgetragen oder vorzugsweise eine physikalische Oberflächenbehandlungen mittels Beflammung, Corona oder Plasma vorgenommen werden.

Als Haftklebemasse für das erfindungsgemäße Haftklebeband können die dem Fachmann bekannten Haftklebemassen auf Basis von Naturkautschuk, synthetischen Kautschuken wie Homo- oder Copolymere des Polyisoptens, Polybutadiens, 1-Butens, Polyisobutylens, Vinylacetats sowie Styrol-Block-Copolymeren oder besonders bevorzugt auf Basis von Copolymeren oder Copolymer-Gemischen aus Acrylsäureestern bestehen.
Die Haftklebmasse wird auf der Trägerfolie ein- oder beidseitig mit einem Klebmasseauftrag (nach der Trocknung) vorzugsweise von 8 bis 100 g/m$^2$ und besonders vorzugsweise 12 bis 50 g/m$^2$ beschichtet. Die Beschichtung mit der Haftklebemasse kann aus einem Lösemittel, als Dispersion oder als 100%-System zum Beispiel per Extrusion erfolgen.

Die Haftklebemasse des Haftklebebands besteht in der bevorzugten Ausführung aus einem oder mehreren Copolymeren aus zumindest den folgenden Monomeren

c1) 70 bis 100 Gew.-% Acrylsäureester und/oder Methacrylsäureester beziehungsweise deren freie Säuren mit der folgenden Formel

$$CH_2 = CH(R_1)(COOR_2),$$

wobei $R_1$ = H und/oder $CH_3$ und $R_2$ = H und/oder Alkylketten mit 1 bis 30 C-Atomen sind.
Hier können der zugrunde liegenden Monomermischung als weitere Komponente
c2) bis zu 30 Gew.-% olefinisch ungesättigte Monomere mit funktionellen Gruppen zugesetzt sein.

In einer sehr bevorzugten Auslegung werden für die Monomere c1) Acrylmomonere eingesetzt, die Acryl- und Methacrylsäureester mit Alkylgruppen bestehend aus 4 bis 14 C-Atomen, bevorzugt 4 bis 9 C-Atomen umfassen. Spezifische Beispiele, ohne sich durch diese Aufzählung einschränken zu wollen, sind n-Butylacrylat, n-Pentylacrylat, n-Hexylacrylat, n-Heptylacrylat, n-Octylacrylat, n-Nonylacrylat, Laurylacrylat, Stearylacrylat, Behenylacrylat, und deren verzweigten Isomere wie zum Beispiel t-Butylacrylat und 2-Ethylhexylacrylat.

Weitere Verbindungsklassen, die ebenfalls in geringen Mengen unter c1) hinzugesetzt werden können, sind Methylmethacrylate, Cyclohexylmethacrylate, Isobornylacrylat und Isobornylmethacrylate.

In einer sehr bevorzugten Auslegung werden für die Monomere c2) Vinylester, Vinylether, Vinylhalogenide, Vinylidenhalogenide, Vinylverbindungen mit aromatischen Cyclen und Heterocyclen in α-Stellung eingesetzt.

Auch hier seien einige Beispiele genannt, ohne dass die Aufzählung als abschließend zu betrachten ist:

Vinylacetat, Vinylformamid, Vinylpyridin, Ethylvinylether, Vinylchlorid, Vinylidenchlorid und Acrylnitril.

In einer weiteren sehr bevorzugten Auslegung für die Monomere c2) werden Monomere mit folgenden funktionellen Gruppen eingesetzt:

Hydroxy-, Carboxy-, Epoxy-, Säureamid-, Isocyanato- oder Aminogruppen.

In einer vorteilhaften Variante werden für c2) Acrylmonomere eingesetzt entsprechend der allgemeinen Formel

$$CH_2 = CH(R_1)(COOR_3),$$

wobei $R_1$ = H oder $CH_3$ ist und der Rest $R_3$ eine funktionelle Gruppe darstellt oder beinhaltet, welche eine nachfolgende UV-Vernetzung der Haftklebemasse unterstützt, welche zum Beispiel in einer besonders bevorzugten Auslegung eine H-Donor Wirkung besitzt.

Besonders bevorzugte Beispiele für die Komponente c2) sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Acrylamid und Glyceridylmethacrylat, Benzylacrylat, Benzylmethacrylat, Phenylacrylat, Phenylmethacrylat, t-Butylphenylacrylat, t-Butylaphenylmethacrylat, Phenoxyethylacrlylat, Phenoxyethylmethacrylat, 2-Butoxyethylmethacrylat, 2-Butoxyethylacrylat, Dimethylaminoethylmethacrylat, Dimethylaminoethylacrylat, Diethylaminoethylmethacrylat, Diethylaminoethylacrylat, Cyanoethylmethacrylat, Cyanoethylacrylat, Gycerylmethacrylat, 6-Hydroxyhexylmethacrylat, N-tert.-Butylacrylamid, N-Methylolmethacrylamid, N-(Buthoxymethyl)methacrylamid, N-Methylolacrylamid, N-(Ethoxymethyl)acrylamid, N-Isopropylacrylamid, Vinylessigsäure, Tetrahydrofufurylacrlyat, β-Acryloyloxypropionsäure, Trichloracrylsäure, Fumarsäure, Crotonsäure, Aconitsäure, Dimethylacrylsäure, wobei diese Aufzählung nicht abschließend zu verstehen ist.

In einer weiteren bevorzugten Auslegung werden für die Komponente c2) aromatische Vinylverbindungen eingesetzt, wobei bevorzugt die aromatischen Kerne aus $C_4$ bis $C_{18}$ bestehen und auch Heteroatome enthalten können. Besonders bevorzugte Beispiele sind Styrol, 4-Vinylpyridin, N-Vinylphthalimid, Methylstyrol, 3,4-Dimethoxystyrol, 4-Vinylbenzoesäure, wobei diese Aufzählung nicht abschließend zu verstehen ist.

Zur Herstellung der Polyacrylathaftklebemassen werden vorteilhaft konventionelle radikalische Polymerisationen oder kontrollierte radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich jedoch alle für Acrylate dem Fachmann geläufigen, üblichen Initiatoren.

Bevorzugt wird die innere Festigkeit (Kohäsion) der Polyacrylhaftklebemasse des erfindungsgemäßen Haftklebebandes durch eine Vernetzung gesteigert. Durch die Vernetzung der Haftklebemasse erhöht sich die Scherfestigkeit des erfindungsgemäßen Haftklebebandes. Für die Vernetzung können den acrylathaltigen Haftklebemassen optional verträgliche Vernetzersubstanzen zugesetzt werden. Als Vernetzer eignen sich besonders Metallchelate, multifunktionelle Isocyanate, multifunktionelle Amine oder multifunktionelle Alkohole. Die Vernetzung kann in günstiger Weise thermisch oder durch energiereiche Strahlung (actinische Strahlung) erfolgen, im letzteren Fall insbesondere durch Elektronenstrahlung (ES) oder nach Zugabe geeigneter Photoinitiatoren durch ultraviolette Strahlung.

Zur Optimierung der Eigenschaften kann die zum Einsatz kommende Haftklebemasse mit einem oder mehreren Additiven wie Klebrigmachern (Harzen), Weichmachern, Füllstoffen, Pigmenten, UV-Absorbern, Lichtschutz- oder Alterungsschutzmitteln abgemischt sein. Bei der Auswahl der Additive ist darauf zu achten, dass die Kompatibilität mit den biochemischen Nachweisreaktionen und Reagenzien nicht negativ beeinflusst wird. Klebrigmacher (Harze) sind beispielsweise Kohlenwasserstoffharze (zum Beispiel Polymere auf Basis ungesättigter $C_5$- oder $C_9$-Monomere), Terpenphenolharze, Polyterpenharze aus Rohstoffen wie zum Beispiel α- oder β-Pinen, aromatische Harze wie Cumaron-Inden-Harze oder Harze auf Basis Styrol oder α-Methylstyrol wie Kolophonium und seine Folgeprodukte, zum Beispiel disproportionierte, dimerisierte oder veresterte Harze, zum Beispiel Umsetzungsprodukte mit Glycol, Glycerin oder Pentaerythrit, um nur einige zu nennen, sowie weitere Harze.

Besonders bevorzugt wird eine Haftklebemasse bestehend aus einem Copolymer oder einem Copolymergemisch aus Acrylsäureestern, die keine der genannten Additive enthält, eingesetzt, es sich also um eine so genannte Reinacrylat-Haftklebemasse handelt.

Zusammenfassend weist die bevorzugte Ausführungsform des Haftklebebands eine Polyacrylathaftklebemasse auf, das durch Coextrusion, Schmelz-, Lösemittel- oder Dispersionsbeschichtung gefertigt wird. Besonders bevorzugt ist eine Kommarakelbeschichtung der Polyacrylathaftklebemasse aus einem geeigneten Lösemittel oder Lösemittelgemisch.

Im Falle der einseitigen Beschichtung der Trägerfolie mit der Polyacrylathaftklebemasse kann die Rückseite der Trägerfolie mit einem der bekannten Trenn- beziehungsweise Releasemittel (gegebenenfalls mit anderen Polymeren abgemischt) beschichtet sein. Beispiele sind Stearyl-Verbindungen (zum Beispiel Polyvinylstearylcarbamat, Stearylverbindungen von Übergangsmetallen wie Cr oder Zr, Harnstoffe aus Polyethylenimin und Stearylisocyanat), Polysiloxane (zum Beispiel als Copolymer mit Polyurethanen oder als Propfcopolymer auf Polyolefin), thermoplastische Fluorpolymere. Der Begriff Stearyl steht als Synonym für alle geraden oder verzweigten Alkyle oder Alkenyle mit einer C-Zahl von mindestens 10, wie zum Beispiel Octadecyl.

Das Haftklebeband kann ebenfalls die handelsüblichen Trennfolien, die üblicherweise aus einem Basismaterial aus Polyethylen, Polypropylen, Polyester oder Papier, das ein- oder doppelseitig mit Polysiloxan beschichtet ist, enthalten. Die Trennfolie kann auf einer oder beiden Seiten des Haftklebebandes (bei einer beidseitigen Haftklebmassenbeschichtung) laminiert sein und dient zur leichteren Abrollbarkeit und Verarbeitbarkeit des Haftklebebandes.

Die hydrophile Beschichtung für die nachträgliche Funktionalisierung der Haftklebmasse besteht aus einer tensidhaltigen Beschichtung, die vorzugsweise aus einem Lösemittel auf die Klebmassenoberfläche aufgebracht und getrocknet wird. Die tensidhaltige Beschichtung enthält mindestens ein Tensid und kann ebenfalls noch weitere Zusätze wie zum Beispiel Polymere als Bindemittel oder Verdicker enthalten. Das Tensid ist maßgeblich für die Funktionalisierung der Haftklebemasse verantwortlich. Als Tenside können Verbindungen aus linearen oder verzweigten Alkyl-, Alkylbenzyl-, perfluorierten Alkyl- oder Siloxan-Gruppen mit hydrophilen Kopfgruppen wie anionischen Salzen von Carbonsäuren, Phosphorsäuren, Phosphonsäuren, Sulfaten, Sulfonsäuren, Sulfobernsteinsäure, kationischen Ammoniumsalzen oder nichtionischen Polyglycosiden, Polyaminen, Polyglycolestern, Polyglycolethern, Polyglycolaminen, polyfunktionellen Alkoholen oder Alkoholethoxylaten verwendet werden. Diese Auswahl ist eine beispielhafte Aufzählung und stellt keine Einschränkung des erfinderischen Gedankens auf die genannten Tenside dar.

Beispielhaft seien folgende geeignete Tenside genannt:

- nichtionische Fluortenside zum Beispiel Fluorad FC-4430 und FC-4432 von 3M Inc., Zonyl® FSO-100 von DuPont Inc. und Licowet® F 40 von Clariant AG
- ionische Fluortenside zum Beispiel Zonyl® FSA von DuPont Inc. und Chemguard S-228M von Chemguard Inc.
- nichtionische Silicontenside zum Beispiel Q2-5211 und Sylgard® 309 von Dow Corning Inc., Lambent® 703 von Lambent Technologie Inc. und Tegopren® 5840 von Evonik AG
- ionisches Alkylsulfat-Salz zum Beispiel Rewopol® NLS 28 von Evonik GmbH
- ionisches Sulfobernsteinsäuresalze zum Beispiel Lutensit® A-BO von BASF AG oder Rewopol® SB DO von Evonik GmbH

Bei dem Aufbringen einer tensidhaltigen Beschichtung auf eine Haftklebemasse werden verschiedene Schwierigkeiten beobachtet. Zum einen bildet das Tensid auf der Haftklebemassenoberfläche eine Tensidschicht aus. Die Tensidschicht an der Oberfläche führt zu einer sehr guten Benetzbarkeit, also zu einer hydrophilen Funktionalisierung der Haftklebemassenoberfläche. Diese Tensidschicht führt jedoch ebenfalls zu einem Verlust der Haftklebeeigenschaften der Klebmasse. Eine Verklebung der Haftklebemasse ist nicht mehr oder nur sehr eingeschränkt möglich. Zum anderen wird überraschenderweise beobachtet, dass Beschichtungen mit einer Vielzahl von Tensiden wiederum keine Verbesserung der Benetzbarkeit ergeben. Vermutlich sind diese Tenside sehr gut mit der Klebmasse verträglich und wandern vollständig in die Haftklebemasse ein und haben somit keinerlei Effekt für die Benetzbarkeit an der Klebmassenoberfläche. Überraschenderweise und für den Fachmann nicht vorhersehbar zeigen sich anionische Tenside und insbesondere Sulfobernsteinsäuresalze oder Karbonsäure- oder Phosphorsäuresalze mit Fluoralkylketten als besonders geeignet, um die scheinbare Unvereinbarkeit zwischen Unverträglichkeit mit der Haftklebemasse, welche Vorraussetzung für die lagerstabilen Funktionalisierung der Haftklebmassenoberfläche ist, und dem damit verbundenen Verlust an Haftklebrigkeit gegenüber einer guten Verträglichkeit aber damit einhergehenden fehlenden hydrophilen Funktionalisierung der Haftklebmassenoberfläche zu lösen. Als ganz besonders geeignet erweist sich die Verwendung von Natrium-diisooctyl-sulfosuccinat (CAS-Nummer 577-11-7) als Tensid für die Beschichtung der Haftklebemasse.

Die Konzentration an Tensid beziehungsweise Tensiden in der tensidhaltigen Beschichtungslösung beträgt maximal 30 Gew.-% und vorzugsweise maximal 20 Gew.-%. Dadurch ergibt sich auf der Haftklebmassenoberfläche nach dem Trocknen eine tensidhaltige Beschichtung, die maximal eine Auftragsdicke von 1 $\mu$m und vorteilhafterweise maximal von 0,5 $\mu$m aufweist. Diese Auftragsdicke trifft jedoch nur auf eine gleichmäßige vollflächige Beschichtung.

Die funktionalisierte Haftklebemasse des erfindungsgemäßen Haftklebebandes zeichnet sich durch ein sehr gutes Benetzungsverhalten gegenüber wässrigen und biologischen Flüssigkeiten aus. Das sehr gute Benetzungsverhalten der funktionalisierten Haftklebemasse zeigt sich in einer Oberflächenspannung von mindestens 60 mN/m und vorzugsweise von mindestens 65 mN/m, in einem Kontaktwinkel mit Wasser von kleiner als 35° und vorzugsweise kleiner 30° sowie in einer schnellen Transportgeschwindigkeit einer Testflüssigkeit in einem Testkanal (Funktionstest) von mindestens 25 mm/s. Ein entsprechend gutes Benetzungsverhalten (Kontaktwinkel und Funktionstest) wird auch nach einer langen Lagerungszeit, welche durch eine Schnellalterung von mindestens sechs Wochen bei erhöhten Temperaturen von zum Beispiel 40 °C und 70 °C simuliert werden kann, beobachtet. Die sehr gute Lagerungsbeständigkeit (Alterungsbeständigkeit) des erfindungsgemäßen funktionalisierten Haftklebebands zeigt sich hierbei dadurch, dass die Benetzungseigenschaften (Kontaktwinkel und Füllzeit des Kanals im Funktionstest) nach einer Lagerung von sechs Wochen bei 40 °C und vorzugsweise bei 70 °C sich um maximal 25 % von dem Ursprungswert (ohne Lagerung) unterscheiden.

Als Lösemittel für die tensidhaltige Beschichtungslösung werden Wasser, Alkohole, Ethanol oder höhersiedende Alkohole wie n-Butanol oder Ethoxyethanol, Ketone wie Butanon, Ester wie Essigsäureethylester, Alkane wie Hexan, Toluol oder Gemische aus den vorher genannten Lösemitteln eingesetzt. Die Auswahl eines geeigneten Lösemittels ist wichtig, weil nicht mit jedem Lösemittel eine homogene Beschichtung auf der Haftklebemasse erreicht wird. Zum anderen darf das Lösemittel die unpolare Haftklebemasse nicht zu stark anquellen, da in diesem Fall auch das Tensid stärker in die Haftklebemasse einwandert und somit an der Oberfläche für eine Verbesserung der Benetzbarkeit nicht zur Verfügung steht. Als Lösemittel für die tensidhaltige Beschichtung werden daher besonders Alkohole wie Ethanol, Propanol, Iso-Propanol oder Butanol oder Gemische dieser Alkohole mit Wasser verwendet.

Weiter bevorzugt wird die Oberfläche der Haftklebemasse durch eine Beschichtung mit einem ionischen, bevorzugt anionischen Tensid funktionalisiert, wobei die Beschichtung vorzugsweise zusätzlich ein Bindemittel insbesondere gewählt aus der Gruppe Polyvinylalkohol, Polyvinylbutyral, Polyacrylat oder Cellulose-Derivat enthält.

Die tensidhaltige Beschichtung kann des Weiteren filmbildende Bindemittel enthalten, wie sie zum Beispiel in der Druckfarbenindustrie verwendet werden.

Vorzugsweise werden als Bindemittel Polymere oder Copolymere mit Carboxyl-, Carboxylat-, Amin-, Ammonium-, Amid- oder Alkohol-Funktionalitäten und besonders bevorzugt entsprechende wasserlösliche Polymere oder Copolymere verwendet. Das Polymer dient als Bindemittel beziehungsweise Verdickungsmittel für die tensidhaltige Beschichtung. Beispielhaft und nicht einschränkend seien als geeignete Bindemittel Homo- oder Copolymere wie Polyvinylpyrrolidon, Polyvinylbutyral, Polyester, Polyacrylat, Poly(meth)acrylsäure, Polyvinylacyetat, teilweise hydrolysiertes Polyvinylacetat, Polyvinylalkohol, Poly(meth)acrylamid, Polyamid, Polyethylenglykol, Polypropylenglykol, Cellulose-Derivate genannt. Die genannten Polymere können auch als Dispersionen eingesetzt werden.

In einer bevorzugten Variante der erfindungsgemäßen tensidhaltigen Beschichtung wird ein Polyvinylalkohol als Bindemittel eingesetzt. Polyvinylalkohole werden aus Polyvinylacetat durch Hydrolyse der Acetat-Funktionalität hergestellt. Die Eigenschaften der Polyvinylalkohole können zum einen über das Molekulargewicht des Polymers und zum anderen über den Hydrolysegrad gesteuert werden. Bevorzugt wird ein Polyvinylalkohol mit einem Hydrolysegrad von > 85 Mol-% und besonders bevorzugt von > 95 Mol-% verwendet. Beispielhaft für diese Polymerklasse seien Mowiol® von Kuraray Inc. oder Polyviol® von Wacker Chemie GmbH erwähnt.

In einer weiteren bevorzugten Variante der erfindungsgemäßen tensidhaltigen Beschichtung wird ein Polyvinylbuteral als Binder eingesetzt. Polyvinylbuteral wird aus Polyvinylalkohol durch Veresterung mit n-Butylaldehyd erhalten. Die Eigenschaften werden durch das Molekulargewicht, den Hydrolysegrad und den Acetalisierungsgrad bestimmt. Bevorzugt wird ein Polyvinylbuteral mit einem Vinylacetalgehalt von > 75 Gew.-%, einem Vinylacetatgehalt von < 5 Gew.-%

und einem Vinylalkoholgehalt von 15 bis 30 Gew.-% verwendet. Beispielhaft für diese Polymerklasse seien Mowital® von Kuraray Inc. oder Pioloform® von Wacker Chemie GmbH erwähnt.

In einer weiteren bevorzugten Variante der erfindungsgemäßen tensidhaltigen Beschichtung wird ein Cellulose-Derivat als Bindemittel eingesetzt. Besonders geeignet sind hierbei Carboxymethylcellulose (CMC) und Celluloseacetat. Diese Derivate der Cellulose werden durch Umsetzung von einem Teil der Hydroxygruppen der Cellulose mit Chloressigsäure zu den entsprechenden Ethern. In der alkalischen Form als Natriumsalz sind die Carboxymethylcellulosen gut löslich in Wasser. Beispielhaft für diese Substanzklasse seien Blanose® CMC 7MF von Hercules Inc. und Walocel® CRT von Dow Wolff Cellulosics Inc. erwähnt.

Die tensidhaltige Beschichtung wird vollflächig oder partiell als Raster über die gesamte Fläche oder partiell in separaten, voneinander abgegrenzten Bereichen auf die Oberfläche der Haftklebemasse des erfindungsgemäßen Haftklebebandes aufgetragen. Für den vollflächigen Auftrag eignen sich vorteilhafterweise Beschichtungsverfahren wie beispielsweise Spray-Coating, Rasterwalzenauftrag, Mayer-Bar-Beschichtung, Mehrwalzenauftragsbeschichtung, Kondensationsbeschichtung, Aerosolbeschichtung aber auch Druckverfahren.

Die Beschichtung kann in Form eines oder mehrerer Streifen in Längsrichtung (Maschinenrichtung) erfolgen und/oder gegebenenfalls in Querrichtung. Weiterhin kann die Beschichtung rasterpunktförmig mittels zum Beispiel Siebdruck oder Flexodruck, wobei die Pünktchen auch unterschiedlich groß und/oder unterschiedlich verteilt sein können, durch Tiefdruck in Längs- und Querrichtung zusammenhängenden Stegen oder durch Rasterdruck aufgebracht werden. Die Beschichtung kann in Kalottenform (hergestellt durch Siebdruck) oder auch in einem anderen Muster wie Gitter, Streifen, Zickzacklinien vorliegen. Die partielle Beschichtung erfolgt bevorzugt mit einem Druckverfahren wie Sieb-, Inkjet- oder Flexodruck.

Um eine bessere Benetzbarkeit beziehungsweise Verankerung der funktionellen Beschichtung auf der Haftklebmassenoberfläche zu erreichen, können auch hier vor dem Aufbringen der tensidhaltigen Beschichtung eine zusätzliche Primerbeschichtung aufgebracht oder physikalische Vorbehandlungsmethoden vorzugsweise Coronabehandlung durchgeführt werden.

Eine typische Anwendung des erfindungsgemäßen Haftklebebands ist in medizinischen Diagnosestreifen oder als Abdeckung von Kanälen von Microfluidic Devices gegeben. Das erfindungsgemäße Haftklebeband mit seiner hydrophilen Funktionalisierung stellt bei diesen Anwendungen den Transport der biologischen Flüssigkeit durch den Messkanal beziehungsweise die Kanäle sicher. Dieser Transport muss auch nach einem längeren Zeitraum (Lagerzeit des Diagnosestreifens) zuverlässig und mit gleicher Geschwindigkeit gewährleistet werden. Die in den Microfluidic Devices und Biosensoren zum Einsatz kommenden Nachweis- und Enzymreaktionen mit den biologischen Flüssigkeiten, zum Beispiel der Nachweis des Blutzuckergehaltes, werden durch das funktionalisierte Haftklebeband oder deren Inhaltsstoffe nicht beeinflusst. Es zeichnet sich durch eine sehr gute Kompatibilität zu diesen Nachweis- und Enzymreaktionen aus.

**Prüfmethoden**

**Oberflächenspannung und Kontaktwinkelmessung**

Die Messung des Kontaktwinkels mit Wasser und der Oberflächenspannung auf festen Oberflächen erfolgt nach EN 828:1997 mit einem Gerät G2/G402 der Firma Krüss GmbH. Die Oberflächenspannung wird mit der Methode nach Owens-Wendt-Rabel&Kaeble nach Messung des Kontaktwinkels mit deionisiertem Wasser und Diiodmethan bestimmt. Die Werte ergeben sich jeweils aus der Mittlung von vier Messwerten.

Der Kanaltest wird auch nach einer Lagerung bei 23 °C, 40 °C und 70 °C durchgeführt, um die Alterungs- und Lagerungsbeständigkeit zu prüfen.

**Funktionstest**

Zur Beurteilung des Transportverhaltens einer wässrigen Testflüssigkeit wird ein Kapillartest durchgeführt. Hierzu wird die Aufgabeöffnung des Testkanals in eine Testflüssigkeit, bestehend aus deionisiertem Wasser und 1 Gew.-% Naphtholrot, gehalten. Die Transportgeschwindigkeit der Testflüssigkeit im Testkanal wird mittels einer Videokamera zwischen zwei Markierungen mit einem Abstand von 4 mm gemessen. Der Testkanal hat eine breite von 1,0 mm eine Höhe von 75 $\mu$m, wobei das erfindungsgemäße Haftklebeband eine Wandung des Testkanals bildet.

Der Kanaltest wird auch nach einer Lagerung bei 23 °C, 40 °C und 70 °C durchgeführt, um die Alterungs- und Lagerungsbeständigkeit zu prüfen.

Als Testflüssigkeit werden ebenfalls biologische Flüssigkeiten wie Blut verwendet. Allerdings sind biologische Flüssigkeiten wie Blut als Testflüssigkeit weniger gut geeignet, da diese Eigenschaftsschwankungen unterliegen. So schwankt zum Beispiel die Viskosität von Blut sehr stark in Abhängigkeit vom Hämatokrit-Wert.

**Klebkraft**

Die Prüfung der Schälfestigkeit (Klebkraft) erfolgte in Anlehnung an PSTC-1. Ein 2 cm breiter Streifen des Haftklebebandes wird auf dem Prüfuntergrund (geschliffenen Stahlplatte) durch fünfmaliges doppeltes Überrollen mittels einer 5 kg Rolle verklebt. Die Platte wird eingespannt und der Selbstklebestreifen über sein freies Ende an einer Zugprüfmaschine unter einem Schälwinkel von 180° mit einer Geschwindigkeit von 300 mm/min abgezogen und die dafür notwendige Kraft ermittelt. Die Messergebnisse sind in N/cm angegeben und über drei Messungen gemittelt. Alle Messungen werden bei Raumtemperatur durchgeführt.

Im Folgenden soll die Erfindung anhand mehrerer Beispiele näher erläutert werden, ohne damit die Erfindung unnötig einschränken zu wollen.

**Beispiele**

Die in den Beispielen erwähnten einseitigen Haftklebebänder wurden wie folgt hergestellt:

Ein für eine radikalische Polymerisation konventioneller Reaktor wurde mit 28 kg Acrylsäure, 292 kg 2-Ethylhexylacrylat, 40 kg Methylacrylat und 300 kg Aceton/Isopropanol (97:3) befüllt. Nach 45 Minuten Durchleiten von Stickstoffgas unter Rühren wurde der Reaktor auf 58 °C hochgeheizt und 0,2 kg Azoisobutyronitril (AIBN, Vazo 64®, Firma DuPont) hinzugegeben. Anschließend wurde das äußere Heizbad auf 75 °C erwärmt, und die Reaktion konstant bei dieser Außentemperatur durchgeführt. Nach 1 h Reaktionszeit wurde wiederum 0,2 kg AIBN hinzugegeben. Nach 3 h und 6 h wurde mit jeweils 150 kg Aceton/Isopropanol (97:3) das Gemisch verdünnt. Zur Reduktion der Restinitiatoren wurden nach 8 h und nach 10 h jeweils 0,4 kg Bis-(4-tert.-Butylcyclohexanyl)-Peroxydicarbonat (Perkadox 16®, Firma Akzo Nobel) hinzugegeben. Die Reaktion wurde nach 22 h Reaktionszeit abgebrochen und auf Raumtemperatur abgekühlt.

Nach der Polymerisation wurde das Polymer mit Isopropanol auf einen Feststoffgehalt von 25 % verdünnt und dann mit 0,4 Gew.-% Aluminium(III)-acetylacetonat unter Rühren abgemischt. Anschließend wurde die Polymerlösung mit Hilfe eine Komma-Rakels einseitig auf einen 50 $\mu$m dicken Polyesterträger (Hostaphan RN 50 von Mitsubishi Polyesterfilms GmbH), der zuvor mittels Corona vorbehandelt wurde, beschichtet. Die Trocknung erfolgte für 10 Minuten bei 120 °C. Der Masseauftrag nach der Trocknung beträgt 15 g/m$^2$. Die Klebmasse wurde anschließend mit einem Trennpapier abgedeckt.
Dieses Haftklebeband wurde für zur Herstellung aller Beispielsausführungen und Gegenbeispiele verwendet.

| Rohstoff | Hersteller | Rohstoffart |
|---|---|---|
| **Tenside** | | |
| Lutensit A-BO | BASF AG | Na-diisoctylsulfosuccinat |
| Rewopol SB DO 75 | Degussa AG | Na-diisoctylsulfosuccinat |
| Tegopren W 5840 | Degussa AG | Siloxan-Ethoxylate |
| Zonyl FSO-100 | Du Pont Inc. | Nichtionisches Fluortensid |
| Rhodapex CO-433 | Rhodia Inc. | Ammonium-Ethoxylsulfat |
| **Bindemittel** | | |
| Mowiol 4-98 | Kuraray Inc. | Plyvinylalkohol |
| Blanose CMC 7MF | Hercules GmbH | Na-Carboxymethylcellulose |
| **Haftklebmassen** | | |
| Aroset 5255 | Ashland Inc. | Acrylat-Haftklebmasse |

**Beispiel 1**

Von dem zuvor beschriebenen Haftklebeband wurde das Trennpapier entfernt. Anschließend wurde auf die offene Haftklebemasse eine Beschichtungslösung bestehend aus 15 Gew.-% Lutensit® A-BO von BASF AG in Butanol mittels eines Drahtrakels beschichtet. Nach der Trocknung der Beschichtung für 5 min bei 120 °C wurde die Klebmasse erneut mit einem Trennpapier abgedeckt.

Die funktionalisierte Haftklebmasse zeichnet sich durch sehr gute Benetzungseigenschaften (Kontaktwinkel, Funktionstest) aus, die nach der Lagerzeit nur geringfügig abfallen. Allerdings wird eine recht niedrige Klebkraft beobachtet.

**Beispiel 2**

Analog Beispiel 1 wurde die Haftklebemasse des Haftklebebandes mit einer Lösung aus 1 Gew.-% Tegopren® 5840 von Evonik AG, 5 Gew.-% Rewopol® SB DO von Evonik GmbH, 40 Gew.-% Wasser und 54 Gew.-% Ethanol beschichtet und getrocknet.
Die funktionalisierte Haftklebmasse zeigt sehr gute Benetzungseigenschaften, die auch nach der Lagerzeit nur geringfügig abfallen.

**Beispiel 3**

Die Haftklebmassenseite des Haftklebebands wird mit einem Flexodruckverfahren im Rasterdruck (Durchmesser der Rasterpunkte 0,4 mm, Abstand der Rasterpunkte 1,0 mm) mit einer hydrophilen Druckfarbe bestehend aus 3 Gew.-% Rewopol® SB DO von Evonik GmbH und 2 Gew.-% Blanose CMC 7MF von Hercules GmbH in Wasser bedruckt.
Die funktionalisierte Haftklebmasse zeigt sehr gute Benetzungseigenschaften, die auch nach der Lagerzeit stabil sind. Durch die Beschichtung mit Rasterpunkten ergibt sich eine deutlich verbesserte Klebkraft gegenüber den Beispielen 1.

**Beispiel 4**

Die Haftklebmassenseite des Haftklebebands wird mit einem tensidhaltigen Lack, bestehend aus 1,5 Gew.-% Zonyl® FSA von Du Pont Inc., 7,5 Gew.-% Mowiol 4-98 von Kuraray Inc. in Wasser, mittels einer Keramikrasterwalze beschichtet, so dass einzelne Rasterpunkte entstehen.
Die funktionalisierte Haftklebmasse zeigt ausgezeichnete Benetzungseigenschaften mit einer sehr hohen Geschwindigkeit des Flüssigkeitstransportes im Funktionstest. Die Benetzungseigenschaften ändern sich auch während der Lagerzeit nur geringfügig. Durch die Beschichtung mit Rasterpunkten ergibt sich auch hier eine deutlich verbesserte Klebkraft gegenüber den Beispielen 1.
Übersicht über die Ergebnisse der Beispiele

|  | Einheit | Beispiel1 | Beispiel 2 | Beispiel 3 | Beispiel 4 |
|---|---|---|---|---|---|
| Trägerfolie |  | 50 $\mu$m PET | 50 $\mu$m PET | 50 $\mu$m PET | 50 $\mu$m PET |
| Haftklebemasse |  | Polyacrylat | Polyacrylat | Polyacrylat | Polyacrylat |
| Klebmasseauftrag | g/m$^2$ | 15 | 15 | 15 | 15 |
| Klebkraft auf Stahl | N/cm | 1,5 | 1,8 | 2,4 | 2,1 |
| Oberflächenspannung | mN/m | 67 | 65 | 61 | 69 |
| Oberflächenspannung nach 6 Wochen bei 40 °C | mN/m | 66 | 63 | 60 | 69 |
| Oberflächenspannung nach 6 Wochen bei 70 °C | mN/m | 65 | 63 | 60 | 68 |
| Kontakt-Winkel | ° | 23 | 26 | 29 | 20 |
| Kontakt-Winkel nach 6 Wochen bei 40 °C | ° | 25 | 28 | 29 | 21 |
| Kontakt-Winkel nach 6 Wochen bei 70 °C | ° | 26 | 28 | 29 | 23 |
| Kanaltest | mm/s | 49 | 42 | 31 | 59 |
| Kanaltest nach 6 Wochen bei 40 °C | mm/s | 43 | 41 | 29 | 56 |
| Kanaltest nach 6 Wochen bei 70 °C | mm/s | 39 | 40 | 30 | 53 |

## Gegenbeispiele

### Gegenbeispiel 1

Das vorhergenannte Haftklebeband ohne funktionelle Beschichtung.
Auf der Klebmassenoberfläche wird eine niedrige Oberflächenspannung gemessen. Ein Spreiten beziehungsweise Transport der wässrigen Testflüssigkeiten **auf** der Klebmassenoberfläche findet nicht statt. Die Testkanäle sind nicht funktionstüchtig.

### Gegenbeispiel 2

Die Haftklebmassenoberfläche des Haftklebebands wurde analog Beispiel 1 mit einer Beschichtungslösung aus 35 Gew.-% Lutensit® A-BO von BASF AG in Butanol beschichtet und getrocknet.
Diese funktionalisierte Haftklebemasse zeigt sehr gute Benetzungseigenschaften. Die Oberfläche ist jedoch sehr wachsartig beziehungsweise seifig. Eine Verklebungsfestigkeit des Haftklebebandes auf zum Beispiel Polyester-Prüfplatten ist kaum möglich. Das spiegelt sich in den sehr geringen Klebkraftwerten wider. Beim Kanaltest wird ein Unterlaufen der Testflüssigkeit zwischen der funktionalisierten Haftklebemasse und Verklebungsuntergrund beobachtet. Eine Messung ist somit nicht möglich. Eine Verwendung dieses Haftklebebandes ist nicht möglich.

### Gegenbeispiel 3

Die Haftklebmessenoberfläche des Haftklebebands wurde analog Beispiel 1 mit einer Beschichtungslösung aus 20 Gew.-% Triton® X-100 von Dow Chemicals Inc. in Wasser beschichtet und getrocknet.
Diese funktionalisierte Haftklebemasse zeigt nur unmittelbar nach der Beschichtung gute Benetzungseigenschaften. Bereits nach einer kurzen Lagerzeit von 1 Woche wird keine verbesserte Benetzbarkeit gegenüber dem nicht-funktionalisierten Haftklebeband beobachtet. Es ist zu vermuten, dass das Tensid vollständig in die Haftklebemasse migriert und damit an der Haftklebmasseoberfläche keine Wirkung mehr zeigt. Eine Verwendung dieses Haftklebebandes ist nicht möglich.

### Gegenbeispiel 4

Als Gegenbeispiel wurde das Beispiel 8 aus WO 02/085185 A1 hergestellt. Dazu wurde eine Haftklebemasse aus 94 Gew.-% Aroset 5255 von Ashland Inc. und 6 Gew.-% Rhodapex CO-433 Rhodia Inc. hergestellt und auf einen 50 $\mu$m dicken Polyesterträger (Hostaphan RN 50 von Mitsubishi Polyesterfilms GmbH), der zuvor mittels Corona vorbehandelt wurde, beschichtet. Die Trocknung erfolgte für 10 Minuten bei 120 °C. Der Masseauftrag nach der Trocknung betrug 15 g/m$^2$. Nach dem Beschichtungsschritt wurde die Klebmasse mit einem Trennpapier abgedeckt.
Diese hydrophile Klebmasse zeigt nur mäßige Benetzungseigenschaften. Im Funktionstest wird nur ein langsames Füllen des Testkanals beobachtet.
Übersicht über die Ergebnisse der Gegenbeispiele

|  | Einheit | Gegen-beispiel1 | Gegen-beispiel 2 | Gegen-beispiel 3 | Gegen-beispiel 4 |
|---|---|---|---|---|---|
| Trägerfolie |  | 50 $\mu$m PET | 50 $\mu$m PET | 50 $\mu$m PET | 50 $\mu$m PET |
| Haftklebemasse |  | Polyacrylat | Polyacrylat | Polyacrylat | Polyacrylat |
| Klebmasseauftrag | g/m$^2$ | 15 | 15 | 15 | 15 |
| KlebkraftaufStahl | N/cm | 3,1 | 0,2 | 2,9 | 2,1 |
| Oberflächenspannung | mN/m | 14 | 70 | 71 | 56 |
| Oberflächenspannung nach 6 Wochen bei 40 °C | mN/m | 13 | 69 | 49 | 55 |
| Oberflächenspannung nach 6 Wochen bei 70 °C | mN/m | 13 | 68 | 43 | 55 |

(fortgesetzt)

| | Einheit | Gegen-beispiel1 | Gegen-beispiel 2 | Gegen-beispiel 3 | Gegen-beispiel 4 |
|---|---|---|---|---|---|
| Kontakt-Winkel | ° | 110 | 18 | 17 | 37 |
| Kontakt-Winkel nach 6 Wochen bei 40 °C | ° | 106 | 21 | 56 | 38 |
| Kontakt-Winkel nach 6 Wochen bei 70 °C | ° | 101 | 23 | 68 | 38 |
| Kanaltest | mm/s | -- | --* | 58 | 12 |
| Kanaltest nach 6 Wochen bei 40 °C | mm/s | -- | --* | -- | 10 |
| Kanaltest nach 6 Wochen bei 70 °C | mm/s | -- | --* | -- | 11 |
| *: die Kanäle können nicht hergestellt werden, da die Klebkraft zu gering ist | | | | | |

**Patentansprüche**

1. Haftklebeband bestehend aus einem Trägermaterial, das ein- oder beidseitig mit einer Haftklebemasse beschichtet ist,
**dadurch gekennzeichnet, dass**
mindestens eine Haftklebemassenoberfläche durch eine zusätzliche tensidhaltige Beschichtung funktionalisiert ist, wobei die Funktionalisierung der Haftklebemassenoberfläche auch nach einer Lagerzeit von 6 Wochen bei 40 °C erhalten bleibt sowie die Klebkraft auf Stahl der funktionalisierten Haftklebemasse mindestens 0,5 N/cm beträgt.

2. Haftklebeband nach Anspruch 1,
**dadurch gekennzeichnet, dass**
die Haftklebemasse aus einem oder mehreren Copolymeren besteht, wobei Acrylat-Monomere den Hauptbestandteil bilden.

3. Haftklebeband nach den Ansprüchen 1 oder 2,
**dadurch gekennzeichnet, dass**
die Beschichtung zur Funktionalisierung der Haftklebemasse mindestens ein ionisches, vorzugsweise ein anionisches Tensid, das Fluoralkylketten enthalten kann, und besonders bevorzugt ein Salz eines Bernsteinsäureesters als Tensid enthält.

4. Haftklebeband nach zumindest einem der Ansprüche 1 bis 3,
**dadurch gekennzeichnet, dass**
die Beschichtung zur Funktionalisierung der Haftklebemasse nach der Trocknung ausschließlich aus einem Salz eines Sulfobernsteinsäureesters, vorzugsweise Natrium-sulfobernsteinsäure-bis-2-ethylhexylester oder Natrium-sulfobernsteinsäure-dioctylester, ohne weitere Zusatzstoffe besteht.

5. Haftklebeband nach zumindest einem der vorherigen Ansprüche,
**dadurch gekennzeichnet, dass**
die Konzentration des Tensids beziehungsweise der Tenside in der tensidhaltigen Beschichtung zur Funktionalisierung der Haftklebemasse maximal 30 Gew.-% und vorzugsweise maximal 20 Gew.-% beträgt.

6. Haftklebeband nach zumindest einem der vorherigen Ansprüche,
**dadurch gekennzeichnet, dass**
die Beschichtung ein Bindemittel enthält, insbesondere gewählt aus der Gruppe Polyvinylalkohol, Polyvinylbutyral, Polyacrylat oder Cellulose-Derivat.

7. Haftklebeband nach zumindest einem der vorherigen Ansprüche,
**dadurch gekennzeichnet, dass**

die tensidhaltige Beschichtung in einem geeigneten Lösemittel oder in Wasser gelöst auf die Haftklebemasse partiell oder vollflächig aufgetragen und anschließend getrocknet wird.

8. Haftklebeband nach zumindest einem der vorherigen Ansprüche,
**dadurch gekennzeichnet, dass**
die durch die tensidhaltige Beschichtung funktionalisierte Haftklebemasse folgende Eigenschaften besitzt:

- eine Oberflächenspannung von mindestens 60 mN/m und vorzugsweise von mindestens 65 mN/m,
- einen Kontaktwinkel mit Wasser kleiner als 35° und vorzugsweise kleiner 30° und/oder
- eine Klebkraft auf Stahl von mindestens 1,0 N/cm und vorzugsweise von mindestens 1,5 N/cm.

9. Haftklebeband nach zumindest einem der vorherigen Ansprüche,
**dadurch gekennzeichnet, dass**
die funktionalen Eigenschaften der durch die tensidhaltige Beschichtung funktionalisierten Haftklebemasse, welche durch die Oberflächenspannung und dem Kontaktwinkel mit Wasser charakterisiert sind, nach einer Lagerung von 6 Wochen bei 40 °C und vorzugsweise von 6 Wochen bei 70 °C maximal um 25 % von dem Ursprungswert (Frischwert) abweichen.

10. Haftklebeband nach zumindest einem der vorherigen Ansprüche,
**dadurch gekennzeichnet, dass**
das Trägermaterial aus einer Polyesterfolie mit einer bevorzugten Dicke von 12 bis 350 $\mu$m und weiter vorzugsweise 50 bis 150 $\mu$m besteht, die weiter vorzugsweise ein- oder beidseitig mit 8 bis 100 g/m$^2$ und ganz besonders vorzugsweise mit 12 bis 50 g/m$^2$ einer Haftklebemasse beschichtet ist.

11. Verwendung eines Haftklebeband nach zumindest einem der vorherigen Ansprüche in medizinischen Anwendungen, vorzugsweise in Diagnosestreifen, Biosensoren, Point-of-Care-Devices oder Microfluidic Device, mittels derer biologische Flüssigkeiten untersucht werden.

12. Verfahren zur Herstellung eines funktionalisieren Haftklebebandes insbesondere zur Verwendung in einem Diagnosestreifen oder Microfluidic Device, wobei eine Beschichtungslösung aus einem Lösungsmittel oder Wasser, in dem mindestens ein Tensid gelöst ist, auf ein Haftklebeband, das aus einem Trägermaterial, welches ein- oder beidseitig mit einer Haftklebemasse beschichtet ist, besteht, aufgebracht wird und das Haftklebeband mit der Beschichtungslösung getrocknet wird, so dass sich nach der Trocknung ein tensidhaltige Beschichtung auf der Oberfläche der Haftklebemasse ergibt.

13. Verfahren zur Herstellung eines funktionalisieren Haftklebebandes insbesondere zur Verwendung in einem Diagnosestreifen oder Microfluidic Device nach Anspruch 12, wobei die Beschichtungslösung mindestens ein anionisches Tensid vorzugsweise auf Basis eines Sulfobernsteinsäureester-Salzes enthält.

Fig. 1

Fig. 2

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20020112961 A1
- US 6601613 B2
- US 7125711 B2
- EP 1525916 A1
- DE 10234564 A1
- US 5759364 A1
- WO 2005033698 A1
- US 5997817 A1
- US 20080003348 A1
- US 5262475 A1
- EP 1862514 A1
- WO 2005111606 A1
- US 6955738 B2
- US 20020110486 A1
- EP 1394535 A1
- US 20080176068 A1
- WO 02085185 A2
- WO 2004061029 A2
- WO 02085185 A1

**In der Beschreibung aufgeführte Nicht-Patentliteratur**

- **W. Bohl.** Technische Strömungslehre. Vogel Verlag, Juni 2005, 37f